# EUROPÄISCHE PATENTSCHRIFT

(11) **EP 3 392 503 B1**
(45) Veröffentlichungstag und Bekanntmachung des Hinweises auf die Patenterteilung: **09.09.2020**
(21) Anmeldenummer: 18167688.3
(22) Anmeldetag: 17.04.2018
(51) Int. Cl.: F03D 13/40, B63B 35/00, B63B 27/00

(54) **SYSTEM UND VERFAHREN ZUM BELADEN/ENTLADEN EINER SCHWIMMPLATTFORM**
SYSTEM AND PROCESS FOR LOADING/UNLOADING A FLOATING PLATFORM
SYSTÈME ET PROCÉDÉ DE CHARGEMENT/DÉCHARGEMENT D'UNE PLATEFORME FLOTTANTE

(30) Priorität: 21.04.2017 DE 102017003875
(43) Veröffentlichungstag der Anmeldung: 24.10.2018
(73) Patentinhaber: Senvion GmbH, 22297 Hamburg (DE)
(72) Erfinder: SAGNER, Sven, 22337 Hamburg (DE); GUESLOFF-BELOW, Rainer, 23566 Lübeck (DE); PLOEHN, Matthias, 22926 Ahrensburg (DE)
(74) Vertreter: Glawe, Delfs, Moll

(56) Entgegenhaltungen:
- EP-A1- 1 130 173
- EP-A1- 1 321 670
- WO-A1-94/23994
- WO-A1-2014/073956
- WO-A2-2009/080035
- GB-A- 2 454 585
- US-A- 4 509 446
- US-A1- 2003 226 490

## Beschreibung

Die Erfindung betrifft ein System und ein Verfahren zum Beladen/Entladen einer Schwimmplattform. Das System umfasst eine Schwimmplattform und eine Grundstütze. Die Last, die mit der Schwimmplattform transportiert wird, kann insbesondere Komponenten einer Offshore-Windenergieanlage umfassen.

Schwimmplattformen tauchen abhängig vom Beladungszustand unterschiedlich tief in das Wasser ein. Dies ist beim Beladen und Entladen zu berücksichtigen, weil mit dem Hinzufügen und Entfernen von Lasten von der Schwimmplattform eine vertikale Bewegung der Schwimmplattform einhergehen kann. Wird eine Last nicht mittig, sondern nahe einem Rand positioniert, kann die Schwimmplattform sich neigen. Solche vertikale Bewegungen sowie eine geneigte Lage der Schwimmplattform erschweren das Beladen und Entladen und sind deswegen unerwünscht.

Bekannt sind Schwimmplattformen mit integrierten Grundstützen, EP 1 321 670 A1. Die Grundstützen können zwischen einem eingefahrenen Zustand und einem ausgefahrenen Zustand bewegt werden. Im eingefahrenen Zustand werden die Grundstützen von der Schwimmplattform getragen und schwimmen zusammen mit der Schwimmplattform. Im ausgefahrenen Zustand erstrecken die Grundstützen sich von der Schwimmplattform nach unten und stützen sich auf dem Grund ab. Grundstützen dieser Art erhöhen das Gewicht und die Komplexität der Schwimmplattform.

Der Erfindung liegt die Aufgabe zugrunde, ein System und ein Verfahren zum Transportieren von Komponenten einer Offshore-Windenergieanlage vorzustellen, bei denen die Komplexität der Schwimmplattform vermindert ist. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen System ist die Grundstütze in einem Passivzustand so angeordnet, dass die Schwimmplattform oberhalb der Grundstütze schwimmen kann. In einem Aktivzustand stützt die Grundstütze die Schwimmplattform von unten gegenüber dem Grund ab.

Da die Grundstütze ein von der Schwimmplattform separates Teil ist, kann die Schwimmplattform sich unabhängig von der Grundstütze bewegen. Die Schwimmplattform wird nicht durch Elemente der Grundstütze belastet. Damit können sowohl das Gewicht als auch die Komplexität der Schwimmplattform vermindert werden.
Die Grundstütze kann im Passivzustand auf dem Grund liegen. Grund bezeichnet den unterhalb der Wasseroberfläche angeordneten Boden, im Falle eines Transports auf dem Meer also den Meeresgrund bzw. den Hafengrund. Bei Bedarf kann die Grundstütze kann gegenüber dem Grund verankert sein, um zu verhindern, dass die Grundstütze durch Bewegungen des Schwimmkörpers oder sonstige Einflüsse gegenüber dem Grund verschoben wird. Möglich ist auch eine Verwendung der Grundstütze ohne Verankerung mit dem Grund.
Die Grundstütze kann in einem Nutzzustand schwerer sein als Wasser, so dass sie von selbst auf den Grund sinkt. In einem Transportzustand kann die Grundstütze leichter sein als Wasser, so dass sie an der Oberfläche schwimmend zu einem anderen Einsatzort geschleppt werden kann.
Die Ausdehnung der Grundstütze in vertikaler Richtung kann im Passivzustand kleiner sein als im Aktivzustand. Vorzugsweise ist die Erstreckung in vertikaler Richtung im Passivzustand so klein, dass die Schwimmplattform oberhalb der Grundstütze schwimmen kann, ohne die Grundstütze zu berühren. Das obere Ende der Grundstütze kann im Passivzustand mit einem Abstand zur Wasseroberfläche angeordnet sein.
Im Aktivzustand kann die Erstreckung der Grundstütze in vertikaler Richtung so groß sein, dass die Grundstütze an der Unterseite der Schwimmplattform anliegt. Im Aktivzustand ist die Grundstütze vorzugsweise so eingerichtet, dass sie unter den auftretenden Lasten nicht komprimiert wird. Die Schwimmplattform kann dann ihre vertikale Position behalten, auch wenn sie mit zusätzlichen Lasten beaufschlagt wird. Die Schwimmplattform kann im abgestützten Zustand dieselbe vertikale Position haben, die sie auch im freischwimmenden Zustand hat. Möglich ist auch, dass die Schwimmplattform durch die Grundstütze gegenüber dem schwimmenden Zustand angehoben wird.
Damit die Grundstütze die Schwimmplattform stabil abstützen kann, ist es von Vorteil, wenn die Schwimmplattform an ihrer Unterseite eine Anlagefläche aufweist, an dem die Grundstütze anliegen kann. Die Anlagefläche kann sich über wenigstens 40 %, weiter vorzugsweise über wenigstens 60 %, weiter vorzugsweise über wenigstens 80 % der Fläche der Schwimmplattform erstrecken. Die Anlagefläche kann im Wesentlichen horizontal ausgerichtet sein, insbesondere kann die Neigung der Anlagefläche gegenüber der Horizontalen kleiner als 20°, vorzugsweise kleiner als 10°, weiter vorzugsweise kleiner als 5° sein.

Die Grundstütze kann eine verformbare Kammer umfassen, in deren Innenraum im Aktivzustand ein Medium angeordnet ist. Das Medium kann ein flüssiges Medium sein, beispielsweise Wasser. Die verformbare Kammer kann im Aktivzustand mit dem Medium prall gefüllt sein. Um die Grundstütze in den Passivzustand zu bringen, kann das Medium teilweise oder vollständig aus dem Innenraum der verformbaren Kammer abgelassen werden. Die verformbare Kammer kann im Passivzustand ein geringeres Volumen haben als im Aktivzustand.

Die verformbare Kammer kann eine Hülle umfassen, die gegenüber Biegekräften flexibel ist. Gegenüber in der Fläche der Hülle wirkenden Zugkräften ist das Material der Hülle vorzugsweise steif. Die verformbare Kammer kann beispielsweise als hochfester Gewebeschlauch ausgebildet sein.

Die verformbare Kammer kann eine Längsausdehnung haben, die im Wesentlichen parallel zum Grund ausgerichtet ist. Die Länge der Kammer kann beispielsweise zwischen 5 m und 50 m, vorzugsweise zwischen 15 m und 30 m liegen. Senkrecht dazu kann sich eine Querschnittsfläche der Kammer erstrecken. Die größte Ausdehnung in Querrichtung kann kleiner sein als 50 %, vorzugsweise kleiner sein als 20 %, weiter vorzugsweise kleiner sein als 10 % als die Länge der Kammer. Die Querschnittsfläche kann im Aktivzustand der Grundstütze an die Form eines Kreises angenähert sein. Wenn die verformbare Kammer sich über eine große Fläche auf dem Grund erstreckt, können auch dann große Lasten aufgenommen, wenn der Grund weich ist.

Die Längsausdehnung der verformbaren Kammer kann größer sein als die Breite der Schwimmplattform. Möglich ist auch, dass die Längsausdehnung der verformbaren Kammer größer ist als die Länge der Schwimmplattform. Im Aktivzustand der Grundstütze kann die verformbare Kammer sich annähernd parallel zur Breitenausdehnung der Schwimmplattform erstrecken. Möglich ist auch, dass die verformbare Kammer sich im Aktivzustand der Grundstütze etwa parallel zur Längsausdehnung der Schwimmplattform erstreckt. Beide Varianten ermöglichen eine stabile Abstützung der Schwimmplattform. Die Schwimmplattform kann beispielsweise eine Länge zwischen 20 m und 100 m, vorzugsweise zwischen 40 m und 80 m haben. Die Breite der Schwimmplattform kann zwischen 10 m und 30 m liegen. Die Schwimmplattform kann für eine Last zwischen 2000 t und 5000 t ausgelegt sein.

Das erfindungsgemäße System kann eine Pumpe umfassen, die dazu ausgelegt ist, das Medium zu dem Innenraum der verformbaren Kammer zuzuführen. An die Pumpe kann eine Saugleitung angeschlossen sein, mit der Wasser aus dem Gewässer angesaugt wird, in dem die Schwimmplattform schwimmt. Die Pumpe kann dazu ausgelegt sein, die verformbare Kammer vom Passivzustand in den Aktivzustand zu bringen.

Zwischen der Pumpe und der verformbaren Kammer kann sich eine Förderleitung erstrecken. In der Förderleitung kann ein erstes Ventil ausgebildet sein, das in einem geöffneten Zustand ist, wenn die Pumpe das Medium in den Innenraum der verformbaren Kammer fördert. Im Aktivzustand der Grundstütze kann das erste Ventil geschlossen sein.

Die verformbare Kammer kann mit einem zweiten Ventil versehen sein, über das das Medium aus dem Innenraum der verformbaren Kammer abgelassen werden kann. Das zweite Ventil kann im Aktivzustand der Grundstütze ebenfalls geschlossen sein. Das erste Ventil und das zweite Ventil können als eine gemeinsame Ventileinheit ausgebildet sein, beispielsweise in Form eines 3/3-Wege-Ventils. Wenn das erste Ventil und das zweite Ventil geschlossen sind, kann die verformbare Kammer abgedichtet sein, so dass das Medium auch dann nicht aus der Kammer entweichen kann, wenn ein äußerer Druck auf die Kammer wirkt.

Das erfindungsgemäße System kann ferner eine Pumpe umfassen, mit der Luft in den Innenraum der verformbaren Kammer gefördert werden kann, um die Grundstütze in den Transportzustand zu bringen. Im Transportzustand schwimmt die Grundstütze und kann an einen anderen Einsatzort geschleppt werden.

Die Grundstütze kann eine Mehrzahl von verformbaren Kammern umfassen. Jede der verformbaren Kammern kann eines oder mehrere Merkmale der zuvor beschriebenen verformbaren Kammer aufweisen. Die verformbaren Kammern können bezogen auf ihre Längsausdehnung parallel zueinander ausgerichtet sein. Die Grundstütze kann eine Mehrzahl von verformbaren Kammern umfassen, die nebeneinander angeordnet sind. Die Grundstütze kann außerdem eine Mehrzahl von verformbaren Kammern umfassen, die übereinander angeordnet sind. Insbesondere kann die Mehrzahl der verformbaren Kammern einen Stapel bilden.

Die verformbaren Kammern können miteinander verbunden sein, so dass die Grundstütze insbesondere im Aktivzustand ihre Form und ihre Position auch dann beibehält, wenn die Schwimmplattform sich bewegt oder sonstige Einflüsse auf die Schwimmplattform wirken. Die Verbindung kann beispielsweise Riemen umfassen, die sich im Querschnitt um eine oder mehrere der verformbaren Kammern herum erstrecken. Es kann ein Pumpen- und Ventilsystem vorgesehen sein, mit dem die verformbaren Kammern einzeln oder in Gruppen befüllt und abgesperrt werden können.

Eine vertikale Bewegung der Schwimmplattform kann insbesondere dann störend sein, wenn das Beladen oder Entladen an einer Kaimauer stattfindet. An einer Kaimauer ist häufig eine stimmte Höhenpositionen der Schwimmplattform gewünscht, damit Fahrzeuge von der Kaimauer auf die Schwimmplattform fahren können oder die zu transportierende Komponente auf sonstige Weise ohne Höhenunterschied auf die Schwimmplattform gebracht werden kann. Für diesen Anwendungsfall ist es von Vorteil, wenn die Grundstütze benachbart zu einer Kaimauer angeordnet ist. Wenn die Grundstütze eine oder mehrere verformbare Kammern umfasst, so können diese sich im Wesentlichen parallel zu der Kaimauer erstrecken.

Die Schwimmplattform kann im Aktivzustand der Grundstütze mit der Kaimauer vertäut sein. Die Schwimmplattform kann in einen Formschluss mit der Kaimauer gebracht werden, so dass ein an der Kaimauer anliegender Abschnitt der Schwimmplattform in einer definierten Position relativ zu der Kaimauer gehalten wird. Beispielweise kann ein vorderer Abschnitt der Schwimmplattform auf einem geeigneten Vorsprung der Kaimauer aufliegen.

Die Erfindung betrifft außerdem ein Verfahren zum Beladen/Entladen einer Schwimmplattform. Bei dem Verfahren wird eine Grundstütze in einen Passivzustand gebracht wird. Eine Schwimmplattform wird oberhalb der Grundstütze angeordnet. Die Grundstütze wird in einen Aktivzustand gebracht, so dass die Grundstütze die Schwimmplattform von unten abstützt. Eine Last wird auf der Schwimmplattform angeordnet und/oder von der Schwimmplattform entfernt.
Nach dem Beladen/Entladen kann die Grundstütze wieder in den Passivzustand gebracht werden, so dass die Schwimmplattform oberhalb der Grundstütze schwimmt. Die Schwimmplattform kann dann an einen Zielort verfahren werden.

Für den nächsten Ladevorgang kann die Grundstütze erneut zwischen dem Passivzustand und dem Aktivzustand wechseln. Sind an dieser Stelle keine weiteren Ladevorgänge geplant, kann eine verformbare Kammer der Grundstütze aufgepumpt werden, so dass die Grundstütze schwimmt. Die Grundstütze kann dann zu einem anderen Einsatzort geschleppt werden.

Das Verfahren kann mit weiteren Merkmalen fortgebildet werden, die im Zusammenhang des erfindungsgemäßen Systems beschrieben sind. Das System kann mit weiteren Merkmalen fortgebildet werden, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: ein erfindungsgemäßes System mit Grundstütze im Passivzustand;
- Fig. 2:: das System gemäß Fig. 1, wobei die Grundstütze im Aktivzustand ist;
- Fig. 3:: eine schematische Darstellung von Komponenten des erfindungsgemäßen Systems.

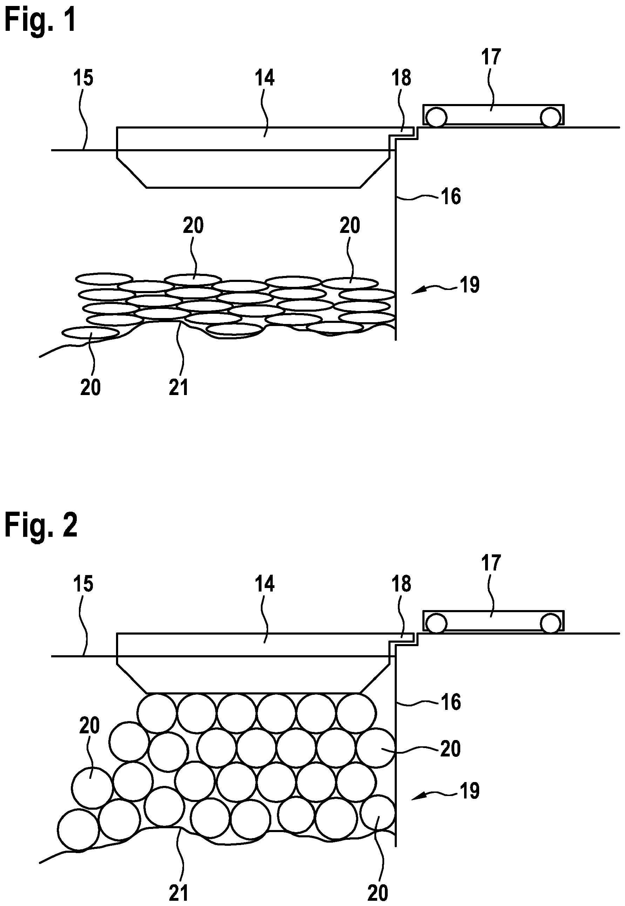

Die Fig. 1 zeigt eine Schwimmplattform 14 in einem Hafenbecken. Ein oberer Teil der Schwimmplattform 14 liegt oberhalb der Wasserlinie 15. Die Schwimmplattform 14 ist mit einer Kaimauer 16 vertäut. Ein vorderes Ende 18 der Schwimmplattform 14 liegt auf einem Absatz der Kaimauer 16 auf. Das vordere Ende 18 der Schwimmplattform kann nach oben geschwenkt werden.

Auf der Kaimauer 16 steht eine Last 17, die auf die Schwimmplattform 14 verladen werden soll. Die Oberfläche der Kaimauer 16 ist in derselben Ebene angeordnet wie die Oberfläche der Schwimmplattform 14. Bei dieser Position der Schwimmplattform 14 ist eine Überfahrt der Last 17 von der Kaimauer 16 auf die Schwimmplattform 14 möglich. Allerdings könnte sich die Schwimmplattform 14 neigen, sobald sie mit der Last 17 belastet wird. Dadurch können Schwierigkeiten beim Übergang der Last 17 von der Kaimauer 16 auf die Schwimmplattform 14 entstehen.

Das erfindungsgemäße System umfasst außer der Schwimmplattform 14 eine Grundstütze, die in den Figuren insgesamt mit 19 bezeichnet ist. Die Grundstütze 19 umfasst eine Vielzahl von hochfesten Gewebeschläuchen 20, die sich parallel zur Kaimauer 16 und quer zur Längsrichtung der Schwimmplattform 14 erstrecken. Die Gewebeschläuche 20 sind in mehreren Lagen übereinander angeordnet, wobei in jeder Lage eine Mehrzahl von Gewebeschläuchen 20 nebeneinander liegen. Die Gewebeschläuche 20 liegen auf dem Meeresgrund/Hafengrund 21 und sind untereinander verbunden, so dass die Gewebeschläuche 20 in ihrer Position bleiben.

In Fig. 1 ist die Grundstütze 19 im Passivzustand. Die Gewebeschläuche 20 sind leer und liegen als Stapel von flach zusammengefallenen Schlauchteilen auf dem Meeresgrund 21. Der tiefste Punkt der Schwimmplattform 14 hat einigen Abstand zu dem oberen Ende der Gewebeschläuche 20. Die Schwimmplattform 14 schwimmt oberhalb der Grundstütze 19.

Im Aktivzustand der Grundstütze 19, der in Fig. 2 gezeigt ist, sind die hochfesten Gewebeschläuche 20 mit Wasser gefüllt und nehmen in vertikaler Richtung wesentlich mehr Raum ein. Die Grundstütze 19 erstreckt sich im Aktivzustand bis zum unteren Abschluss der Schwimmplattform 14. Die Schwimmplattform 14 wird durch die Gewebeschläuche 20 abgestützt und in dieser Position gehalten. Die Gewebeschläuche 20 sind so stabil, dass die vertikale Position der Schwimmplattform 14 auch dann erhalten bleibt, wenn die Last 17 auf die Schwimmplattform 14 aufgefahren wird. Das Beladen der Schwimmplattform 14 wird dadurch erheblich erleichtert.

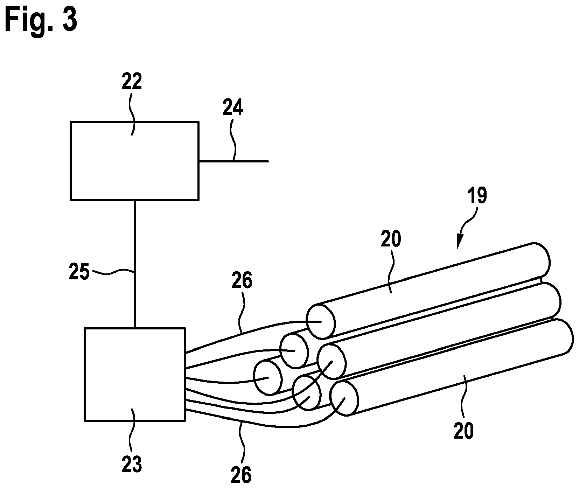

Das erfindungsgemäße System umfasst gemäß Fig. 3 außerdem eine Pumpe 22 und einen Ventilblock 23. Die Pumpe 22 saugt über eine Saugleitung 24 Wasser aus dem Hafenbecken an und fördert dies über eine Zwischenleitung 25 zu dem Ventilblock 23. Jeder der hochfesten Gewebeschläuche 20 ist über eine Anschlussleitung 26 an den Ventilblock 23 angeschlossen. Der Ventilblock 23 umfasst mehrere Schaltzustände, so dass das über die Zwischenleitung 25 kommende Wasser wahlweise zu einzelnen oder mehreren der hochfesten Gewebeschläuche 20 weitergeleitet werden kann.

Der Ablauf des erfindungsgemäßen Verfahrens ist wie folgt. Im Ausgangszustand ist die Grundstütze 19 im Passivzustand. Die unbeladene Schwimmplattform 14 wird an die Kaimauer herangefahren und dort in einer für das Beladen geeigneten Position vertäut. Um die Grundstütze 19 aus dem in Fig. 1 gezeigten Passivzustand in den Aktivzustand gemäß Fig. 2 zu bringen, wird die Pumpe 22 in Betrieb gesetzt und Wasser in Richtung des Ventilblocks 23 geleitet. Der Ventilblock 23 wird so gestaltet, dass die hochfesten Gewebeschläuche 20 mit Wasser gefüllt werden. Sobald dies der Fall ist, werden alle Durchgänge in dem Ventilblock 23 geschlossen, so dass die Gewebeschläuche 20 hermetisch verschlossen sind und das Wasser nicht aus den Gewebeschläuche entweichen kann.

Die Schwimmplattform 14 wird dann durch die Grundstütze 19 von unten abgestützt und in einer stabilen Position gehalten. Die Last 17 kann auf die Schwimmplattform 14 aufgefahren werden, ohne dass die Schwimmplattform 14 ihre vertikale Position verändert.

Sobald die Schwimmplattform 14 vollständig beladen ist, wird die Grundstütze 19 von dem in Fig. 2 gezeigten Aktivzustand wieder in den Passivzustand gemäß Fig. 1 gebracht. Der Ventilblock 23 wird dazu so gestaltet, dass die Anschlussleitungen 26 mit einer Austrittsöffnung des Ventilblocks 23 verbunden werden. Das Wasser strömt aus den hochfesten Gewebeschläuchen 20 aus und kann in das Hafenbecken zurückgeleitet werden.

Die Schwimmplattform 14 wird von der Kaimauer 16 gelöst und zu einem Ort gefahren, an dem die Last 17 wieder von der Schwimmplattform 14 entladen wird. In einem bevorzugten Ausführungsbeispiel ist die Last 17 eine Komponente einer Offshore-Windenergieanlage. Am Ort der Entladung können die Komponenten der Offshore-Windenergieanlage auf eine Errichterbarge umgeladen werden.

## Patentansprüche

1. System zum Beladen/Entladen einer Schwimmplattform (14), umfassend eine Schwimmplattform (14) und eine Grundstütze (19), wobei die Grundstütze (19) in einem Passivzustand so angeordnet ist, dass die Schwimmplattform (14) oberhalb der Grundstütze (19) unabhängig schwimmen kann, und wobei die Grundstütze (19) in einem Aktivzustand die Schwimmplattform (14) von unten gegenüber dem Grund (21) abstützt.

2. System nach Anspruch 1, **dadurch gekennzeichnet, dass** die Grundstütze (19) auf dem Grund (21) liegt.

3. System nach Anspruch 1 oder 2, **dadurch gekennzeichnet, dass** die Grundstütze (19) in einem Nutzzustand schwerer ist als Wasser und in einem Transportzustand leichter ist als Wasser.

4. System nach einem der Ansprüche 1 bis 3, **dadurch gekennzeichnet, dass** die Grundstütze (19) im Passivzustand eine geringere Ausdehnung in Vertikalrichtung hat als im Aktivzustand.

5. System nach einem der Ansprüche 1 bis 4, **dadurch gekennzeichnet, dass** das obere Ende der Grundstütze (19) im Passivzustand mit einem Abstand zur Wasseroberfläche (15) angeordnet ist.

6. System nach einem der Ansprüche 1 bis 5, **dadurch gekennzeichnet, dass** die Grundstütze (19) im Aktivzustand an einer Unterseite der Schwimmplattform (14) anliegt.

7. System nach einem der Ansprüche 1 bis 6, **dadurch gekennzeichnet, dass** die Grundstütze (19) eine verformbare Kammer (20) umfasst, die im Passivzustand ein geringeres Volumen hat als im Aktivzustand.

8. System nach Anspruch 7, **dadurch gekennzeichnet, dass** die verformbare Kammer (20) als hochfester Gewebeschlauch ausgebildet ist.

9. System nach Anspruch 7 oder 8, **gekennzeichnet durch** eine Pumpe (22), die dazu ausgelegt ist, dem Innenraum der verformbaren Kammer (20) ein Medium zuzuführen.

10. System nach einem der Ansprüche 7 bis 9, **dadurch gekennzeichnet, dass** eine Mehrzahl von verformbaren Kammern (20) als Stapel angeordnet ist.

11. System nach Anspruch 10, **gekennzeichnet durch** ein Ventilsystem (23), mit dem die verformbaren Kammern (20) einzeln oder in Gruppen befüllt und abgesperrt werden können.

12. System nach einem der Ansprüche 1 bis 11, **dadurch gekennzeichnet, dass** die Grundstütze (19) benachbart zu einer Kaimauer (16) angeordnet ist.

13. Verfahren zum Beladen/Entladen einer Schwimmplattform (14), bei dem eine Grundstütze (19) in einen Passivzustand gebracht wird, bei dem die Schwimmplattform (14) sich unabhängig von der Grundstütze (19) bewegen kann und oberhalb der Grundstütze (19) angeordnet wird, bei dem die Grundstütze (19) in einen Aktivzustand gebracht wird, so dass die Grundstütze (19) die Schwimmplattform (14) von unten abstützt, und bei dem eine Last auf der Schwimmplattform (14) angeordnet wird und/oder von der Schwimmplattform (14) entfernt wird.

## Claims

1. System for loading/unloading a floating platform (14), comprising a floating platform (14) and a sea-floor support (19), wherein, in a passive state, the sea-floor support (19) is arranged such that the floating platform (14) can float independently above the sea-floor support (19), and wherein, in an active state, the sea-floor support (19) supports the floating platform (14) from underneath with respect to the sea floor (21).

2. System according to Claim 1, **characterized in that** the sea-floor support (19) lies on the sea floor (21) .

3. System according to Claim 1 or 2, **characterized in that** the sea-floor support (19) is heavier than water in a use state and lighter than water in a transportation state.

4. System according to one of Claims 1 to 3, **characterized in that** the sea-floor support (19) has an extent in the vertical direction which is smaller in the passive state than in the active state.

5. System according to one of Claims 1 to 4, **characterized in that**, in the passive state, the top end of the sea-floor support (19) is arranged at a distance from the water surface (15).

6. System according to one of Claims 1 to 5, **characterized in that**, in the active state, the sea-floor support (19) lies against a bottom side of the floating platform (14).

7. System according to one of Claims 1 to 6, **characterized in that** the sea-floor support (19) comprises a deformable chamber (20) which has a smaller volume in the passive state than in the active state.

8. System according to Claim 7, **characterized in that** the deformable chamber (20) is in the form of a high-strength fabric hose.

9. System according to Claim 7 or 8, **characterized by** a pump (22) which is configured to supply a medium to the interior space of the deformable chamber (20).

10. System according to one of Claims 7 to 9, **characterized in that** a plurality of deformable chambers (20) is arranged in the form of a stack.

11. System according to Claim 10, **characterized by** a valve system (23), by means of which the deformable chambers (20) can be filled and shut off individually or in groups.

12. System according to one of Claims 1 to 11, **characterized in that** the sea-floor support (19) is arranged adjacent to a quay wall (16).

13. Method for loading/unloading a floating platform (14), in which a sea-floor support (19) is brought into a passive state in which the floating platform (14) can move independently of the sea-floor support (19) and is arranged above the sea-floor support (19), in which the sea-floor support (19) is brought into an active state such that the sea-floor support (19) supports the floating platform (14) from underneath, and in which a load is arranged on the floating platform (14) and/or removed from the floating platform (14).

## Revendications

1. Système de chargement/déchargement d'une plate-forme flottante (14), comprenant une plate-forme flottante (14) et un support de base (19), le support de base (19) dans un état passif étant disposé de telle sorte que la plate-forme flottante (14) peut flotter indépendamment au-dessus du support de base (19), et le support de base (19) dans un état actif soutenant la plate-forme flottante (14) par le dessous par rapport au sol.

2. Système selon la revendication 1, **caractérisé en ce que** le support de base (19) repose sur le sol (21).

3. Système selon la revendication 1 ou 2, **caractérisé en ce que** le support de base (19) dans un état d'utilisation est plus lourd que l'eau et plus léger que l'eau dans un état de transport.

4. Système selon l'une des revendications 1 à 3, **caractérisé en ce que** le support de base (19) dans l'état passif présente une expansion plus faible dans la direction verticale que dans l'état actif.

5. Système selon l'une des revendications 1 à 4, **caractérisé en ce que** l'extrémité supérieure du support de base (19) à l'état passif est disposée à une certaine distance de la surface de l'eau (15).

6. Système selon l'une des revendications 1 à 5, **caractérisé en ce que** le support de base (19) dans l'état actif repose contre un côté inférieur de la plate-forme flottante (14).

7. Système selon l'une des revendications 1 à 6, **caractérisé en ce que** le support de base (19) possède une chambre déformable (20) qui, dans l'état passif, possède un volume plus faible que dans l'état actif.

8. Système selon la revendication 7, **caractérisé en ce que** la chambre déformable (20) est réalisée sous la forme d'un tuyau en tissu à haute résistance.

9. Système selon la revendication 7 ou 8, **caractérisé par** une pompe (22) qui est conçue pour acheminer un fluide à l'espace intérieur de la chambre déformable (20).

10. Système selon l'une des revendications 7 à 9, **caractérisé en ce qu'**une pluralité de chambres déformables (20) sont disposées sous la forme d'un empilement.

11. Système selon la revendication 10, **caractérisé par** un système de vannes (23) avec lequel les chambres déformables (20) peuvent être remplies et fermées individuellement ou en groupes.

12. Système selon l'une des revendications 1 à 11, **caractérisé en ce que** le support de base (19) est disposé voisin d'un mur de quai (16).

13. Procédé de chargement/déchargement d'une plate-forme flottante (14), avec lequel un support de base (19) est amené dans un état passif, avec lequel la plate-forme flottante (14) peut se déplacer indépendamment du support de base (19) et est disposée au-dessus du support de base (19), avec lequel le support de base (19) est amené dans un état actif de sorte que le support de base (19) soutient la plate-forme flottante (14) par le dessous, et avec lequel une charge est disposée sur la plate-forme flottante (14) et/ou retirée de la plate-forme flottante (14) .
